(19) Europäisches Patentamt
European Patent Office
Office européen des brevets

(11) **EP 2 299 350 A2**

## (12) EUROPEAN PATENT APPLICATION

(43) Date of publication:
**23.03.2011 Bulletin 2011/12**

(51) Int Cl.:
***G06F 3/044*** (2006.01)

(21) Application number: **10176828.1**

(22) Date of filing: **15.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **18.09.2009 JP 2009217752**

(71) Applicant: **Wacom Co., Ltd.**
**Saitama, 349-1148 (JP)**

(72) Inventors:
• **Miyazawa, Yukio**
  **Tokyo 164-0012 (JP)**

• **Kawamata, Naoko**
  **Tokyo 164-0012 (JP)**
• **Munakata, Hiroshi**
  **Tokyo 164-0012 (JP)**
• **Yokota, Masaru**
  **Tokyo 164-0012 (JP)**

(74) Representative: **Appelt, Christian W.**
**Forrester & Boehmert**
**Pettenkoferstrasse 20-22**
**80336 München (DE)**

(54) **Position detection apparatus, sensor, and position detection method**

(57) A position detection apparatus including: a sensor including a plurality of first conductors juxtaposed in parallel to each other in a first direction, a plurality of second conductors juxtaposed in parallel to each other in a second direction, and a plurality of third conductors juxtaposed in parallel to each other in a third direction. The first to third conductors are disposed such that a plane defined by the first conductors, another plane defined by the second conductors, and a further plane defined by the third conductors are placed in a superposed relationship with each other. The apparatus further includes a signal processing circuit configured to supply a signal to the sensor and detect a pointed position by a pointer on the sensor based on a signal obtained from the sensor in response to the signal supplied thereto; the signal processing circuit identifying a position actually pointed to by the pointer.

FIG.9

EP 2 299 350 A2

**Description**

BACKGROUND OF THE INVENTION

1. Field of the Invention

This invention relates to a technique suitably applied to a position detection apparatus, a sensor, and a position detection method. More particularly, the present invention relates to a technique of a position detection apparatus and a position detection method of the capacitance type which can detect two fingers.

2. Description of the Related Art

Variable position inputting apparatus are available which can be used with a personal computer (hereinafter referred to simply as a computer). For example, in addition to a mouse and a trackball, a touch pad is used widely which detects, when a user's finger directly touches a sensor substantially in the form of a flat plate, the touched position or the movement of the finger. Then, a cursor of the computer is moved or various operations are carried out in response to the detected position or movement.

Among such touch pads, a touch pad which utilizes capacitance is prevalent. In position inputting apparatus of the capacitance type represented by a touch pad, usually a user carries out operation with an single finger.

In recent years, a computer incorporates an inputting apparatus which can detect two fingers at the same time and execute various operations in response to the position or movement of the two fingers like, for example, iPod (registered trademark) Touch or iPhone (registered trademark) by Apple Computer, Inc.

For such detection of two fingers, for example, a lattice-like sensor is used wherein a plurality of conductors are formed in a juxtaposed relationship and substantially in parallel to each other on two opposite faces of an insulating sheet formed substantially as a flat plate. For detection of two fingers in this instance, two types are available including a type that detects, from among those cross points of a plurality of conductors which form such a sensor as described above, which cross points are touched by the fingers, and another type that only detects which conductors are touched by the fingers. The former type is hereinafter referred to as the cross point detection type, and the latter type is hereinafter referred to as the electrode line detection type.

A related technique has been proposed by the assignee of the present application and is disclosed in Japanese Patent Laid-Open No. Hei 10-020992.

SUMMARY OF THE INVENTION

In the cross point detection, an ac signal is applied to an arbitrary one of the conductors of one conductor group, which forms the lattice-like sensor, while a signal is received from the conductors of the other conductor group to detect a cross point, which exists at the place where a finger touches. If this cross point detection is used, then regardless of the number of fingers that may exist, it is possible to physically detect all of the fingers. However, since this cross point detection detects presence or absence of a finger with regard to all cross points, signal supply and signal detection are carried out repetitively for each of the conductors (detection place number = number of longitudinal conductors x number of transverse conductors). Therefore, the cross point detection is disadvantageous in that much time is required before the detection of the entire sensor is completed, that the circuit configuration is complicated, that a high cost is required for the detection circuit and that power saving is difficult.

On the other hand, according to the electrode line detection, for example, a signal is sequentially supplied to all of the conductors which form the lattice-type sensor and a variation of an output signal of a conductor, to which the signal is supplied, is detected for each of the conductors to detect a conductor or line which exists at a place where a finger touches. Therefore, detection of a finger can be carried out in a shorter period of time in comparison with the cross point detection (detection place number = number of longitudinal conductors + number of transverse conductors). As a result, a position detection apparatus of the electrode line detection can be configured at a lower cost and power saving can be readily achieved. Therefore, the position detection apparatus of the electrode line detection is suitable for a portable electronic apparatus.

However, the electrode line detection has a problem in that, for example, where two fingers exist on the sensor, four coordinates are detected and coordinates at which the user actually touches cannot be detected.

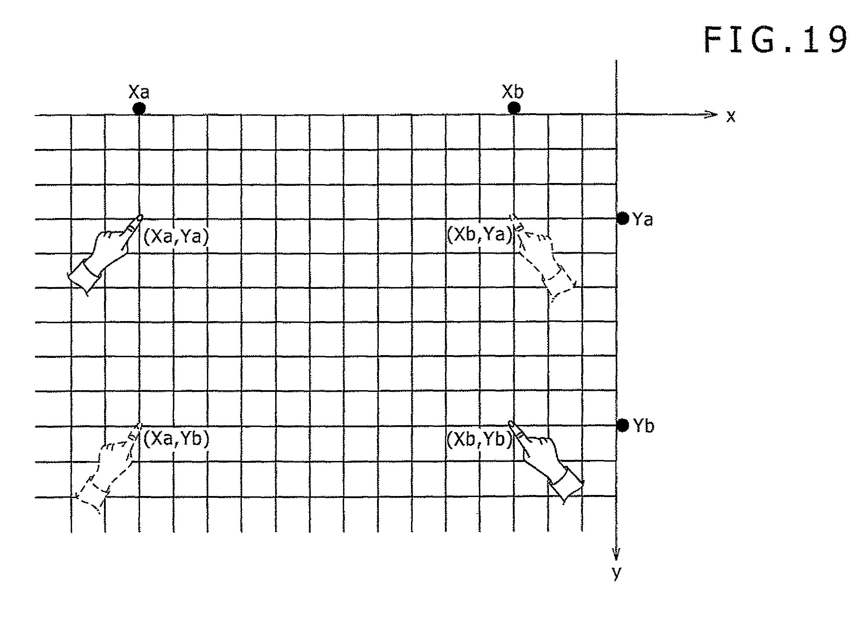

FIG. 19 illustrates a situation which may occur when two fingers are detected by a position detection apparatus based on the electrode line detection.

It is assumed now that, as a result of detection of addresses of those conductors juxtaposed in an X-axis direction and a Y-axis direction, to which fingers are near, based on detection of a variation of the capacitance of the conductors, addresses Xa and Xb in the X-axis direction and addresses Ya and Yb in the Y-axis direction are obtained.

There are two possible cases of the manner in which the operator is touching the position detection surface, which can be determined from the obtained addresses. In one of the cases, the position of (Xa, Ya) is touched by a finger of the left hand and the position of (Xb, Yb) is touched by a finger of the right hand. In the other case, the position of (Xa, Yb) is touched by a finger of the left hand and the position of (Xb, Ya) is touched with a finger of the right hand. In both cases, the addresses Xa and Xb are obtained in the X-axis direction and the addresses Ya and Yb are obtained in the Y-axis direction.

In particular, the electrode line detection wherein the presence of a finger is detected by a "line" has a fundamental defect that, if it is tried to detect the positions of a plurality of different fingers, then accurate positions of the fingers cannot be definitively determined.

According to one aspect of the present invention, a position inputting apparatus is provided, which can detect two fingers with a simple circuit configuration.

In this connection, according to an aspect of the present invention, there is provided a position detection apparatus including a sensor including a plurality of first conductors juxtaposed in parallel to each other in a first direction, a plurality of second conductors juxtaposed in parallel to each other in a second direction and a plurality of third conductors juxtaposed in parallel to each other in a third direction. The first to third conductors are disposed such that a plane defined by the first conductors, another plane defined by the second conductors, and a further plane defined by the third conductors are placed in a superposed (or overlapping/meshed) relationship with each other. The position detection apparatus further includes a signal processing circuit configured to supply a signal to the sensor and detect a position pointed to by a pointer on the sensor based on a signal obtained from the sensor in response to the signal supplied thereto. The signal processing circuit identifies a position actually pointed to by the pointer based on a signal detected through the third conductors juxtaposed in parallel to each other in the third direction when a plurality of signals originating from pointing by the pointer are detected through the first conductors juxtaposed in parallel to each other in the first direction and the second conductors juxtaposed in parallel to each other in the second direction.

According to another aspect of the present invention, there is provided a method of detecting a position pointed to by a pointer using a sensor for detecting a position pointed to by the pointer. The sensor includes a plurality of first conductors juxtaposed in parallel to each other in a first direction, a plurality of second conductors juxtaposed in parallel to each other in a second direction, and a plurality of third conductors juxtaposed in parallel to each other in a third direction. The first to third conductors are disposed in different directions from each other, and a plane defined by the first conductors, another plane defined by the second conductors, and a further plane defined by the third conductors are placed in a superposed relationship with each other. The pointed position detection method includes the steps of: supplying a predetermined signal to the first to third conductors, determining whether or not a plurality of signals corresponding to pointing by the pointer are detected from the first conductors juxtaposed in parallel to each other in the first direction and the second conductors juxtaposed in parallel to each other in the second direction in response to the supplied signal, and identifying a position actually pointed to by the pointer based on a signal from the third conductors juxtaposed in parallel to each other in the third direction when a plurality of signals are detected in response to the pointing by the pointer.

The position detection of the electrode line detection type wherein longitudinal electrodes or first conductors and lateral electrodes or second conductors are used can only detect presence of one finger. Therefore, according to the present invention, in order to detect presence of two fingers, the electrodes or third conductors are newly provided such that they are juxtaposed in the third direction different from the first and second directions of the first and second conductors so that the positions of two fingers can be definitively determined.

Consequently, the present invention can provide a position detection apparatus, a sensor, and a position detection method which can detect two fingers.

BRIEF DESCRIPTION OF THE DRAWINGS

FIG. 1 is a schematic view showing an appearance of an information processing apparatus according to an embodiment of the present invention;
FIG. 2 is a schematic view showing a general configuration of a position detection apparatus shown in FIG. 1;
FIG. 3 is a top plan view of a sensor substrate of a sensor shown in FIG. 2;
FIG. 4 is a partial enlarged view of first conductors shown in FIG. 3;
FIG. 5 is a partial enlarged view of second conductors shown in FIG. 3;
FIG. 6 is a partial enlarged view of the sensor substrate of FIG. 3 as viewed from above;
FIG. 7 is a partial enlarged view of third conductors shown in FIG. 6;
FIG. 8 is a schematic sectional view of the sensor substrate of FIG. 3;
FIG. 9 is a block diagram of the position detection apparatus of FIG. 2;

FIG. 10 is a block diagram showing an interval configuration of a capacitance detection section shown in FIG. 9;

FIG. 11 is a waveform diagram illustrating an output voltage of a low-pass filter shown in FIG. 10;

FIG. 12 is a diagrammatic view illustrating position detection plane data outputted from a control section of the position detection apparatus of FIG. 2 as represented on a time axis;

FIG. 13 is a block diagram showing functional blocks of a position calculation section shown in FIG. 1;

FIG. 14 is a flow chart illustrating a flow of an entire process of the position calculation section of FIG. 13;

FIG. 15 is a flow chart of a finger candidate decision process executed by a coordinate calculation section shown in FIG. 13;

FIG. 16 is a diagrammatic view illustrating a relationship of a point at which a finger exists to the angle of an oblique electrode and the distance between oblique electrodes;

FIGS. 17 and 18 are schematic views illustrating relationships between the positions of a plurality of fingers and the detection values of oblique electrodes; and

FIG. 19 is a schematic view illustrating possible situations which may occur when two fingers are detected by a position detection apparatus based on an electrode line detection method.

## DETAILED DESCRIPTION

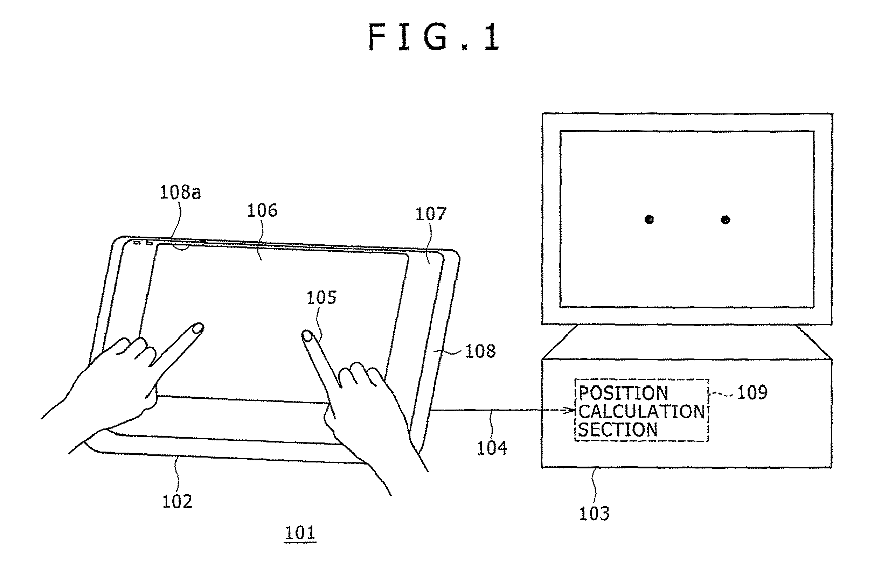

One embodiment of the present invention will now be described in referring to FIGS. 1 to 18.

Referring first to FIG. 1, there is shown an appearance of an information processing apparatus according to one embodiment of the present invention.

The information processing apparatus 101 shown includes a position detection apparatus 102 which transmits data representative of a state of a sensor 106 to a personal computer 103. When a finger 105 of a person is positioned in the proximity of the sensor 106, the position detection apparatus 102 exhibits a variation in data which corresponds to the position to which the finger 105 is near.

The personal computer 103 analyzes position detection plane data transmitted thereto to detect presence or absence of the finger 105 and calculate the position of the finger 105. Then, the personal computer 103 utilizes the obtained information of the presence or absence and the position of the finger 105 in various pieces of application software, that is, in various programs such as rendering software.

A position calculation section 109 is provided as a device driver, which operates on an OS (Operating System), in the personal computer 103. The position calculation section 109 is a program for providing a function of detecting the presence or absence of a finger 105 and calculating the position of the finger 105 from the position detection plane data.

The information processing apparatus 101 includes the position detection apparatus 102 and the personal computer 103.

The position detection apparatus 102 is connected to the personal computer 103, which includes, for example, a display unit, by a cable 104 and is used as an inputting apparatus of the personal computer 103.

The position detection apparatus 102 includes the sensor 106 for detecting a finger 105, a housing 107 of a hollow substantially parallelepiped form having the sensor 106, and so forth. The housing 107 includes an upper case 108 having an opening 108a for exposing an inputting face of the sensor 106 therethrough, and a lower case not shown on which the upper case 108 is placed. The sensor 106 is fitted in the opening 108a of the upper case 108. Thus, a character, a figure, or the like is inputted by pointing to a position of the upper surface of the sensor 106 of the position detection apparatus 102 using a finger 105, which serves as a pointer.

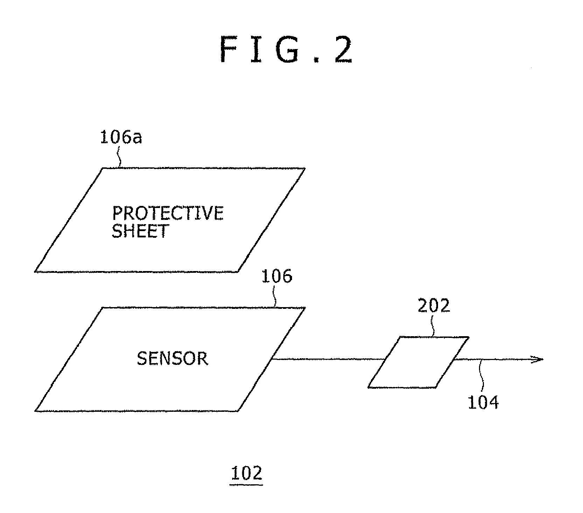

Now, a general configuration of the position detection apparatus to which the present invention is applied is described with reference to FIG. 2. The position detection apparatus 102 shown includes the sensor 106, on which a protective sheet 106a formed, for example, from a PET (polyester) film is provided on an upper surface thereof for protecting third conductors 304 hereinafter described so as not to be touched directly by the human body such as a finger of a hand, and a signal processing circuit 202. The sensor 106 is for measuring a variation of the capacitance of a conductor hereinafter described and is connected to the signal processing circuit 202. The signal processing circuit 202 outputs a variation of an electric characteristic, which is caused by a finger 105 positioned in the proximity of the sensor 106, as data. The signal processing circuit 202 is connected to the personal computer 103 by the cable 104 and outputs position detection plane data which is a result of mathematical operation to a central processing unit (MPU) or the like of the personal computer 103.

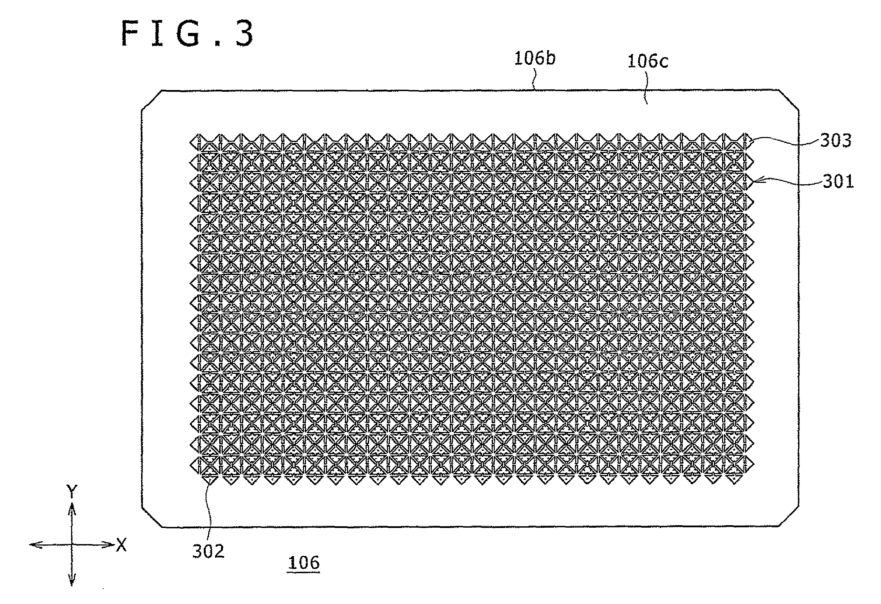

Now, a general structure of the sensor 106 of the position detection apparatus 102 is described with reference to FIG. 3. The sensor 106 shown includes a base substrate 106b of a substantially rectangular shape formed, for example, from a PET sheet, and a detection region 301 of a substantially rectangular shape provided at a substantially central portion of one of the opposite faces of the base substrate 106b, that is, a face (hereinafter referred to as surface) 106c. The detection region 301 detects the human body such as a finger of a hand or the like positioned in the proximity thereof or contacting therewith and detects the coordinate of the point at which the human body is positioned or contacts.

Now, details of the detection region 301 are described with reference to FIGS. 3 to 7.

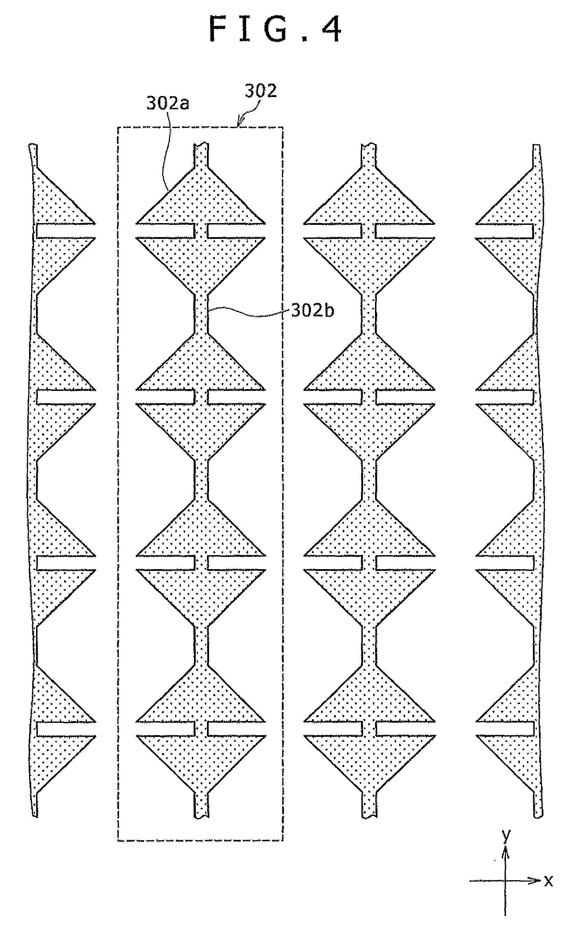

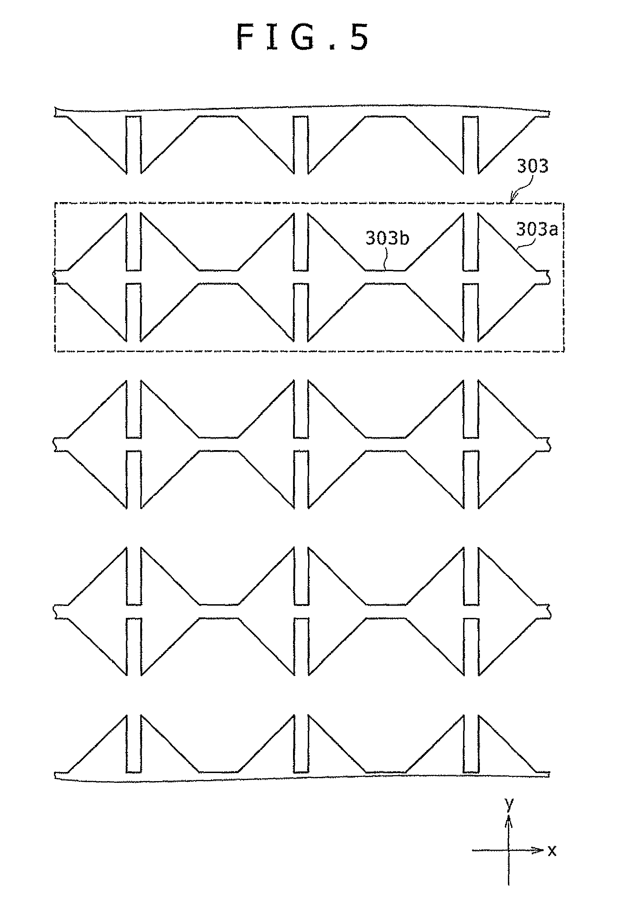

The detection region 301 includes a plurality of first and second conductors 302 and 303, and a plurality of third conductors 304 hereinafter described. The first conductors 302 and the second conductors 303, which form the detection region 301, have detection portions 302a and 303a of a substantially quadrangular shape as shown in FIGS. 4 and 5, respectively.

Referring particularly to FIG. 4, each of the first conductors 302 is formed from a column of a plurality of detection portions 302a provided in a predetermined spaced relationship from each other in a lateral direction (hereinafter referred to as Y-axis direction) of the base substrate 106b. Each two adjacent ones of the detection portions 302a of each first conductor 302 in the Y-axis direction are electrically connected to each other at coupling apexes thereof opposing to each other by a connecting portion 302b. A plurality of such first conductors 302 are juxtaposed in a predetermined spaced relationship from each other in the longitudinal direction (hereinafter referred to as X-axis direction) perpendicular to the Y-axis direction of the base substrate 106b.

Similarly, each of the second conductors 303 is formed from a row of a plurality of detecting portions 303a provided in a predetermined spaced relationship from each other in the X-axis direction of the base substrate 106b as seen in FIG. 5. Referring to FIG. 5, each two adjacent ones of the detecting portions 303a of each second conductor 303 in the X-axis direction are electrically connected to each other at coupling apexes thereof opposing to each other by a connecting portion 303b. Further, a plurality of such second conductors 303 are juxtaposed in a predetermined spaced relationship from each other in the Y-axis direction of the base substrate 106b.

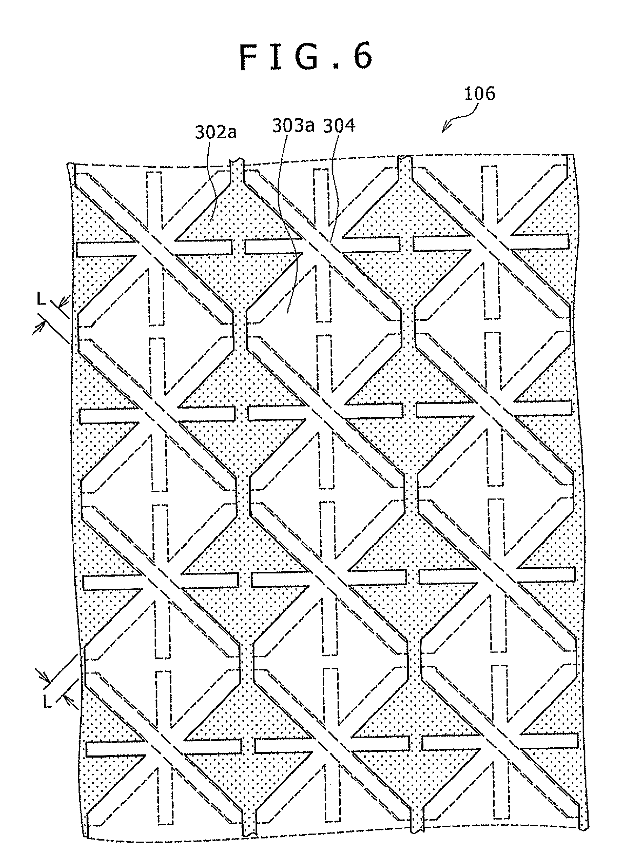

The first and second conductors 302 and 303 are disposed such that a gap of a predetermined distance L is provided between the detection portions 302a and 303a of the first and second conductors 302 and 303 as seen in FIG. 6.

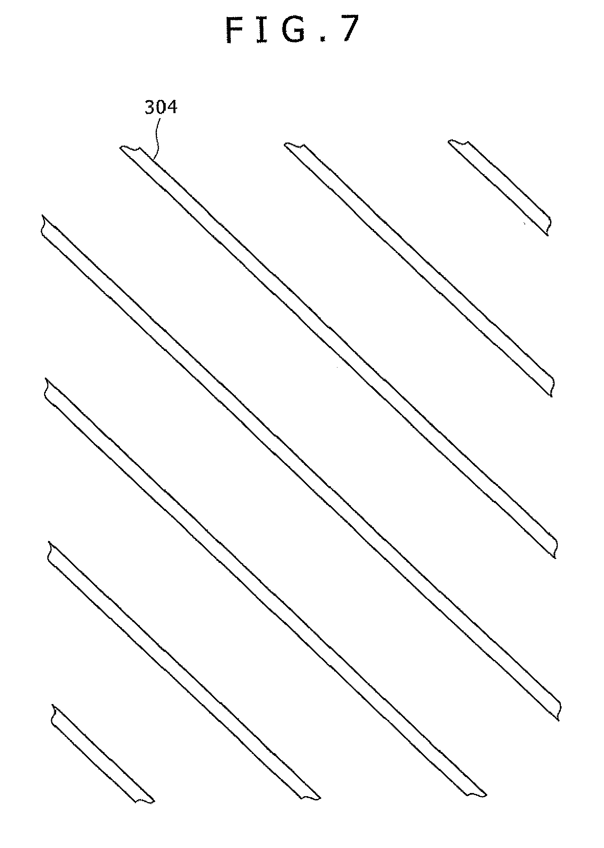

Referring to FIGS. 6 and 7, a plurality of third conductors 304 each having a substantially linear shape are juxtaposed in a direction, that is, in a third direction, inclined by 45 degrees with respect to the X-axis direction and the Y-axis direction. In particular, the third conductors 304 are disposed in a substantially overlapping relationship with the gaps having predetermined distances L provided between the detection portions 302a and 303a of the first and second conductors 302 and 303 such that each of them traverses cross points of the connecting portions 302b and 303b.

The individual detection portions 302a and 303a which form the detection region 301 preferably have such a size that, for example, when the human body, that is, a finger of a hand, is positioned in the proximity of or touches the sensor 106, at least two detection portions 302a and 303a of the first and second conductors 302 and 303 will oppose to the human body or a finger. This arises from the following reason. In particular, where the detection portions 302a and 303a are designed in such a size as just described, if the human body or a finger of a hand is positioned in the proximity of or touches the sensor 106, then at least two detection portions 302a and 303a will oppose to the human body or a finger of a hand. Therefore, the position of the human body or a finger of a hand positioned in the proximity of or contacting the sensor 106 can be detected with a higher degree of accuracy based on a difference in capacitance of the two detection portions 302a and 303a opposing to the human body or a finger of a hand. It is to be noted that the detection portions 302a and 303a are configured such that, for example, the length of a diagonal line from an apex to an opposing apex is set to be 3.8 mm and the width of the predetermined distances L is set to be approximately 0.5 mm.

It is to be noted that, while, in the embodiment described above, the detection portions 302a and 303a are formed in a substantially quadrangular shape, the shape of the detection portions 302a and 303a is not limited to this configuration. For example, the shape of the detection portions 302a and 303a may otherwise be a hexagonal shape or a circular shape. Where the detection sections are formed in a hexagonal shape, preferably they are disposed in a honeycomb pattern.

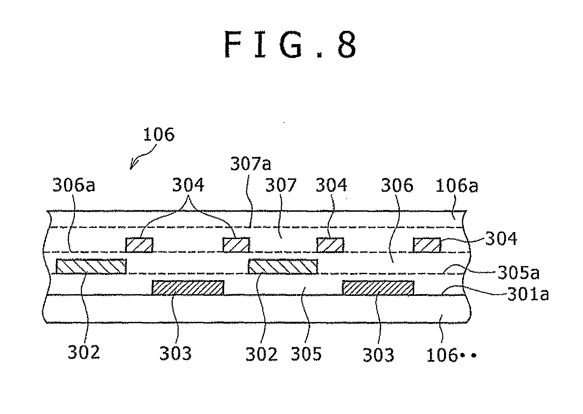

Now, the structure of the sensor 106 is described with reference to FIG. 8. The sensor 106 is formed by laminating the first to third conductors 302, 303 and 304 and an insulating coating material layer on one of two faces of a base substrate 106b.

The second conductors 303 are provided on an upper face 301a of the base substrate 106b, for example, by vapor deposition of silver paste. Further, insulating coating 305 is applied to the upper face 301a of the base substrate 106b on which the second conductors 303 are provided. The insulating coating 305 is applied in such a manner as to cover gaps between the second conductors 303 and also the upper faces of the second conductors 303. On an upper face 305a of the insulating coating 305, the first conductors 302 are provided, for example, by vapor deposition of silver paste. Furthermore, insulating coating 306 is applied to the upper face 305a of the insulating coating 305 on which the first conductors 302 are provided. The insulating coating 306 is applied in such a manner as to cover gaps between the first conductors 302 and also the upper faces of the first conductors 302 similarly to the insulating coating 305.

On an upper face 306a of the insulating coating 306, the third conductors 304 are provided, for example, by vapor deposition of silver paste. Further, insulating coating 307 is applied to the upper face 306a of the insulating coating 306 on which the third conductors 304 are vapor deposited. Also the insulating coating 307 is applied in such a manner as to cover gaps between the third conductors 304 and also the upper faces of the third conductors 304. The protective sheet 106a formed from a PET sheet is pasted to the upper face 307a of the insulating coating 307 which covers the third conductors 304.

A user can touch the protective sheet 106a with a finger to carry out various operations such as, for example, to move a cursor icon or click on a displayed icon while observing the display unit of the personal computer 103.

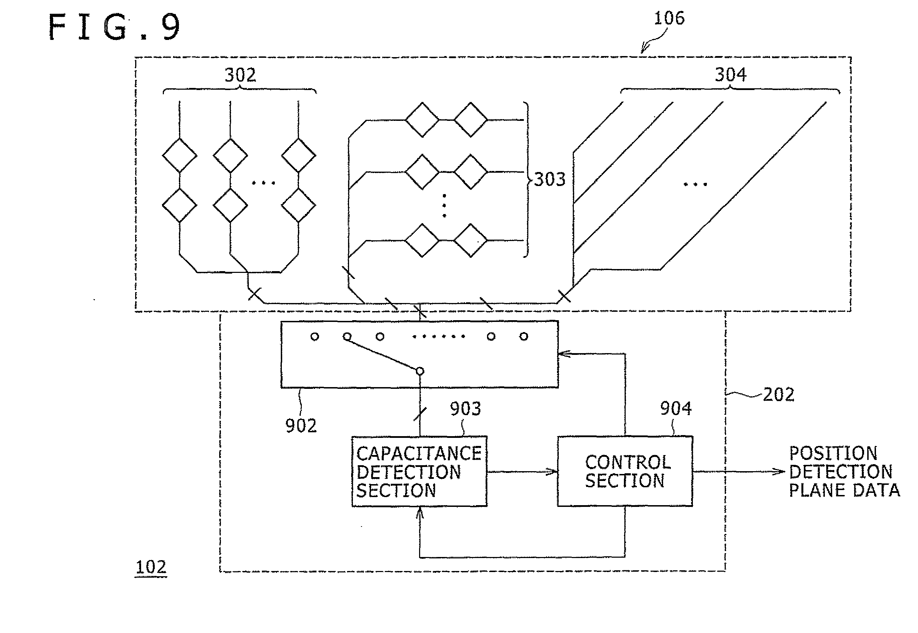

Now, a general configuration of the signal processing circuit 202 is described with reference to FIG. 9. The signal processing circuit 202 shown includes a switch circuit 902 formed, for example, from an analog multiplexer, a capacitance detection section 903, and a control section 904 for controlling the switch circuit 902 and the capacitance detection section 903.

The first conductors 302, second conductors 303 and third conductors 304 are connected to the input side of the switch circuit 902 formed from an analog multiplexer. The first conductors 302, second conductors 303, and third conductors 304 form capacitors through the switch circuit 902.

The switch circuit 902 is connected on the output side thereof to the capacitance detection section 903. The capacitance detection section 903 is connected at an output thereof to the control section 904 which is formed, for example, from a microcomputer.

The control section 904 outputs position detection plane data based on an output signal from the capacitance detection section 903 and controls the capacitance detection section 903 and the switch circuit 902.

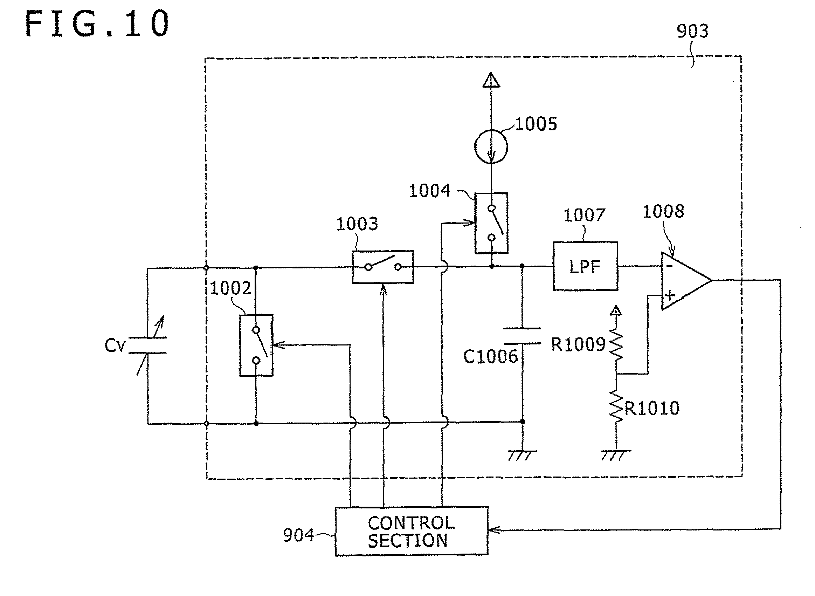

Now, a configuration of the capacitance detection section 903 is described in detail with reference to FIG. 10. The capacitance detection section 903 shown includes a variable capacitor $C_v$, which equivalently represents the first conductors 302, the second conductors 303, the third conductors 304, and the analog multiplexer. It is to be noted that, in the following description, one of terminals of the variable capacitor $C_v$ which is grounded is referred to as a cold side terminal, and the other terminal is referred to as a hot side terminal. A first switch 1002 is connected between the hot side terminal and the cold side terminal, and a second switch 1003 is connected at one terminal thereof to the first switch 1002.

The first switch 1002 is controlled to an on or off state by a first switching controlling signal supplied thereto from the control section 904. Similarly, the second switch 1003 is controlled to an on or off state by a second switching controlling signal supplied thereto from the control section 904. A third switch 1004 is controlled to an on or off state by a third switching signal supplied thereto from the control section 904.

The second switch 1003 is connected at the other terminal thereof to a constant current circuit 1005 through the third switch 1004. Meanwhile, this other terminal of the second switch 1003 and one of the terminals of the third switch 1004 are connected to one of terminals of a reference capacitor C1006. The reference capacitor C1006 is grounded at the other terminal thereof.

One of the terminals of the reference capacitor C1006, the other terminal of the second switch 1003, and the one terminal of the third switch 1004 are connected to an input terminal of a low-pass filter 1007. The low-pass filter 1007 is connected at an output terminal thereof to one input terminal of a comparator 1008. The comparator 1008 is connected at the other input terminal thereof to resistors R1009 and R1010 such that a power supply voltage is divided by the resistors R1009 and R1010 to produce a reference voltage which is applied to the other input terminal of the comparator 1008. The comparator 1008 is connected at an output terminal thereof to the control section 904 such that an output signal of the comparator 1008 is supplied to the control section 904.

Now, a principle of operation of the capacitance detection section 903 is described with reference to FIGS. 9 and 10.

The switch circuit 902 shown in FIG. 9 selects one each of the first conductors 302, second conductors 303, and third conductors 304 and connects the selected conductor to the hot side terminal of the variable capacitor $C_v$ and connects those conductors which are positioned on both sides of the conductor connected to the hot side terminal to the cold side terminal of the variable capacitor $C_v$. Consequently, a capacitor is formed from a combination of the conductor connected to the hot side terminal and the conductors positioned on both sides of the conductor and connected to the cold side terminal.

Then, if a finger 105 is positioned in the proximity of the capacitor, then the capacitance of the capacitor varies. Since the finger 105 is substantially equivalent to a conductor, as the finger 105 approaches, the capacitance of the capacitor increases. The capacitance detection section 903 detects the variation of the capacitance of the capacitor due to the approach of the finger 105.

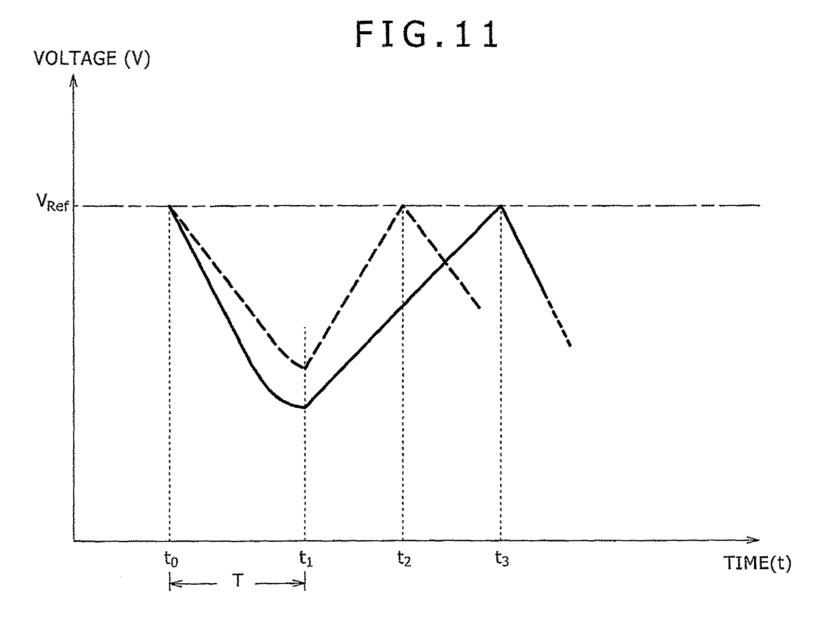

Now, a principle operation of the control section 904 is described with reference to FIGS. 9 to 11. It is to be noted that, in FIG. 11, a solid line curve is a graph indicative of the variation of the capacitance value of the variable capacitor $C_v$ where the finger 105 exists on the sensor 106 while a broken line curve is a graph indicative of the variation of the capacitance value of the variable capacitor $C_v$ where the finger 105 does not exist on the sensor 106.

The control section 904 supplies first to third switching controlling signals for controlling the first to third switches 1002, 1003 and 1004 (refer to FIG. 10) between on and off states, respectively, to the first to third switches 1002, 1003 and 1004. The first and second switching controlling signals are outputted at equal time intervals, and the third switching controlling signal is outputted at predetermined time intervals different from the time intervals at which the first and second switching controlling signals are outputted.

The control section 904 first outputs the first switching controlling signal to the first switch 1002 to control the first switch 1002 to an off state and then outputs the second and third switching controlling signals to the second switch 1003 and the third switch 1004 to control the second and third switches 1003 and 1004 to an on state, to charge up the variable capacitor Cv and the reference capacitor C1006 thereby to raise the terminal-to-terminal voltage to the reference voltage Vref (prior to time t0 of FIG. 11).

Then at time t0, the control section 904 outputs the third switching controlling signal to the third switch 1004 to control the third switch 1004 to an off state and outputs the first and second switching controlling signals to the first and second switches 1002 and 1003, respectively. The first and second switching controlling signals operate the first switch 1002 and the second switch 1003 alternately to on and off states. By the on and off operations of the first switch 1002, the variable capacitor Cv repeats charging and discharging. Therefore, the variable capacitor Cv operates as a switched capacitor. In other words, the first switch 1002, second switch 100,3 and variable capacitor Cv can be regarded equivalently as a resistor.

On the other hand, when the control section 904 outputs the third switching controlling signal to the third switch 1004 at time t0 to control the third switch 1004 to an off state, the charge accumulated in the reference capacitor C1006 is discharged through the equivalent resistor formed from the variable capacitor Cv. The equivalent resistor formed from the variable capacitor Cv varies depending upon the capacitance of the variable capacitor Cv. It is to be noted that, as the capacitance of the variable capacitor Cv increases, the resistance value of the equivalent resistor decreases, and therefore, the drop of the voltage across the reference capacitor C1006 by the discharge becomes steeper.

Then, after lapse of a predetermined interval of time, that is, at time t1, the control section 904 outputs the third switching controlling signal to the third switch 1004 to control the third switch 1004 to an on state. Thereupon, since the control section 904 continuously outputs the first and second switching controlling signals to the first switch 1002 and the second switch 1003, respectively, the first switch 1002 and the second switch 1003 operate alternately to on and off states so that the variable capacitor Cv functions as a switched capacitor while the constant current circuit 1005 is connected to the reference capacitor C1006 to charge the reference capacitor C1006. When the constant current circuit 1005 is connected, the voltage across the reference capacitor C1006 rises until it reaches the reference voltage Vref applied to the comparator 1008 (refer to times t2 and t3 of FIG. 11). Consequently, the output of the comparator 1008 changes from a high potential to a low potential.

The control section 904 receives the output of the comparator 1008 and controls the switch circuit 902 to carry out changeover to a next conductor, and then repeats the operations described above to carry out measurement of the capacitance of the conductor.

Incidentally, the gradient of the voltage drop from time t0 to time t1 illustrated in FIG. 11 and the gradient of the voltage rise after time t1 vary depending upon the equivalent resistor formed by the switched capacitor. In other words, when a finger 105 is not positioned in the proximity of any conductor and the capacitance of the variable capacitor Cv does not exhibit an increase, the resistance value of the variable capacitor Cv is higher than that when a finger 105 is positioned in the proximity of the conductor. Accordingly, discharge of the reference capacitor C1006 becomes moderate within the period from time t0 to time t1 in FIG. 11, and the charging becomes steep within the period from time t1 to time t2. As a result, the period before the voltage across the reference capacitor C1006 becomes equal to the reference voltage Vref again becomes shorter, as seen from the graph indicated by a broken line in FIG. 11.

In contrast, when a finger 105 is positioned in the proximity of the conductor and the capacitance of the variable capacitor Cv indicates an increase, the equivalent resistor of the variable capacitor Cv indicates a decreased resistance value. Accordingly, the discharge of the reference capacitor C1006 is steep within the period from time t0 to time t1 and the charging is moderate within the period of time from t1 to t3. As a result, the period of time in which the voltage across the reference capacitor C1006 becomes equal to the reference voltage Vref again becomes longer as seen from the solid line graph in FIG. 11.

If the period of time from time t0 to time t1 is controlled to be a fixed value T, then the drop of the voltage across the reference capacitor C1006, that is, the charge amount of the reference capacitor C1006, can be varied by the variation of the equivalent resistor of the variable capacitor Cv. Thereafter, by measuring the period of time before the reference voltage Vref is reached, that is, the period of time from time t1 to time t2 or t3, the variation of the resistance of the equivalent resistor of the variable capacitor Cv, that is, the variation of the capacitance of the variable capacitor Cv, can be detected.

Then, the control section 904 uses a predetermined clock and defines the time period T by means of a counter and then measures the period of time from time t1 to time t2 or t3 using the counter. If this measurement is executed for all of the first conductors 302, second conductors 303, and third conductors 304, then measurement values of the conductors are obtained. Since the measurement values vary in response to the capacitance of the variable capacitor Cv, the measurement value with regard to a conductor to which the finger 105 is proximate is high, while the measurement value with regard to a conductor to which the finger 105 is not proximate is low.

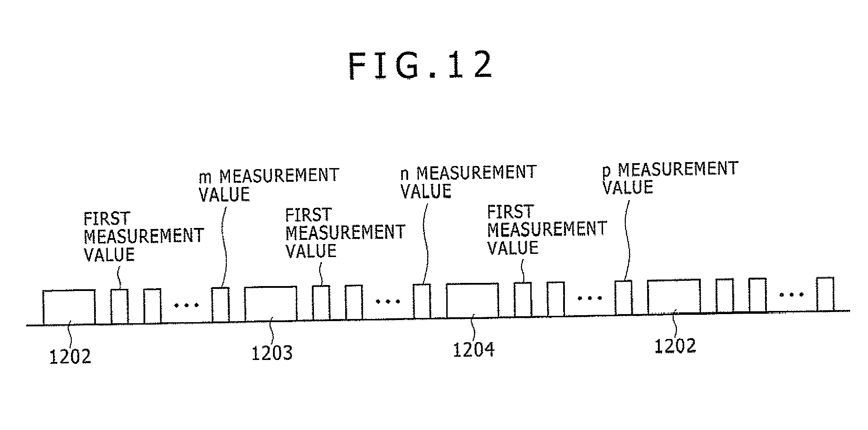

Now, the position detection plane data outputted from the control section 904 of the position detection apparatus 102 is described with reference to FIG. 12.

The control section 904 of the position detection apparatus 102 sends the measurement values of the first conductors 302, second conductors 303, and third conductors 304 with header information added thereto. In particular, the position detection plane data outputted from the control section 904 include a longitudinal electrode header 1202 which is header information for the first conductors 302, a lateral electrode header 1203 which is header information for the second conductors 303, an oblique electrode header 1204 which is header information for the third conductors 304, and the measurement values of the first to third conductors 302, 303 and 304, and are outputted in order of the first conductors 302, second conductors 303, and third conductors 304. More particularly, if it is assumed that m first conductors 302, n second conductors 303, and p third conductors 304 are provided, then the control section 904 first sends the lateral electrode header 1202 and then sends the first measurement value, second measurement value, ... and mth measurement value which are measurement values of the first conductors 302. Subsequently to the mth measurement value, the control section 904 sends the lateral electrode header 1203, and then sends the first measurement value, second measurement value, ... and nth measurement value which are measurement values of the second conductors 303. Similarly, the control section 904 sends the oblique electrode header 1204 subsequently to the nth measurement value, and then sends the first measurement value, second measurement value, ... and pth measurement value which are measurement values of the third conductors 304.

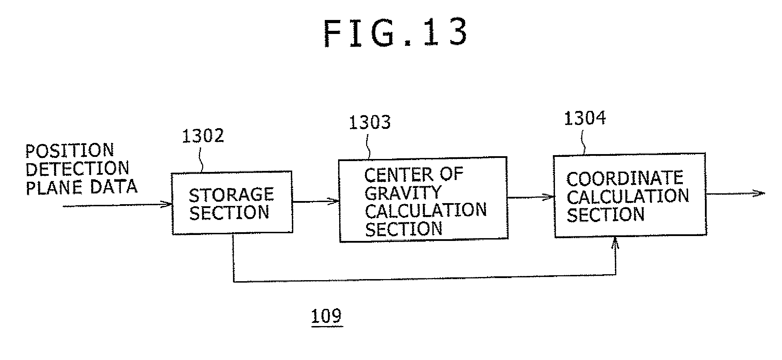

Now, a configuration of the position calculation section 109 is described with reference to FIG. 13. It is to be noted that the position calculation section 109 is a function implemented, for example, by a device driver on the personal computer 103 side.

The position calculation section 109 includes a storage section 1302, a center of gravity calculation section 1303, and a coordinate calculation section 1304. The position detection plane data outputted from the control section 904 of the position detection apparatus 102 are stored once into the storage section 1302, which may be formed from a RAM (Random Access Memory).

When data of the first conductors 302 from within the position detection plane data are received and when data of the second conductors 303 from within the position detection plane data are received, the center of gravity calculation section 1303 carries out center of gravity calculation for the data of the first and second conductors 302 and 303 and then calculates position data of at most two points each of the first conductors 302 and the second conductors 303. Then, the center of gravity calculation section 1303 outputs a result of the calculation to the coordinate calculation section 1304 at the succeeding stage.

The coordinate calculation section 1304 receives the result of the calculation obtained from the center of gravity calculation section 1303, that is, position data of at most two points each of the first conductors 302 and the second conductors 303, and calculates the position of a finger or fingers 105. Thereupon, if two fingers 105 exist, then the coordinate calculation section 1304 uses the data of the third conductors 304 from among the position detection plane data stored in the storage section 1302 to definitively determine the true position of the finger or fingers 105.

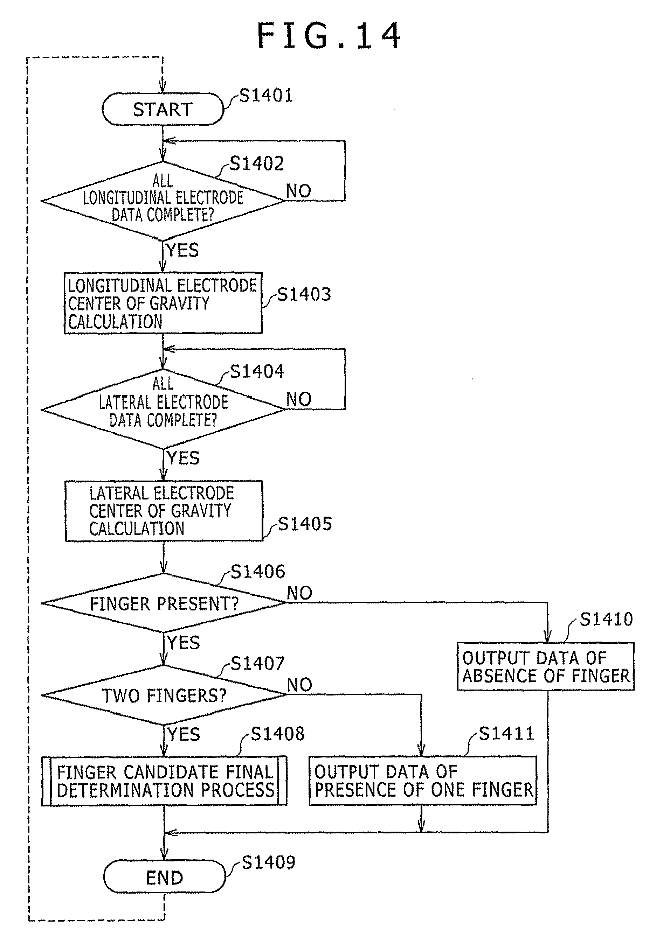

Now, an operation process of the position calculation section 109 is described with reference to a flow chart of FIG. 14.

If the position calculation section 109 starts processing at step S1401, then the center of gravity calculation section 1303 checks an accumulation state of data in the storage section 1302 to confirm whether or not all data of the first conductors 302 are received at step S1402. This process is repeated until all data of the first conductors 302 become complete.

If all data of the first conductors 302 become complete (YES at step S1402), then the center of gravity calculation section 1303 carries out center of gravity calculation for the first conductors 302 at step S1403.

Then, the center of gravity calculation section 1303 checks the accumulation state of data in the storage section 1302 to confirm whether or not all data of the second conductors 303 are received at step S1404. This process is repeated until all data of the second conductors 303 become complete. If all data of the second conductors 303 become complete (YES at step S1404), then the center of gravity calculation section 1303 carries out center of gravity calculation for the second conductors 303 at step S1405.

If the center of gravity calculation of the first conductors 302 and the center of gravity calculation of the second conductors 303 are completed, then the coordinate calculation section 1304 first determines whether or not a finger 105 exists on the sensor 106 at step S1406. If a finger 105 exists on the sensor 106 (YES at step S1406), then the coordinate calculation section 1304 determines at step S1407 whether or not the center of gravity of a first conductor 302 or the center of gravity of a second conductors 303 exists at two places, that is, whether or not two fingers 105 exist. If two fingers 105 exist (YES at step S1407), then the coordinate calculation section 1304 executes a finger candidate final determination process for definitively determining the positions at which the fingers 105 exist at step S1408. Then, the series of processes is ended at step S1409, and the processing returns to step S1401 to repeat the series of processes described above.

On the other hand, if a finger 105 does not exist (NO at step S1406), then the coordinate calculation section 1304 outputs data representing that no finger 105 exists at step S1410, and the processing is ended at step S1409. Thereafter, the processing returns to step S1401 to repeat the series of processes described above.

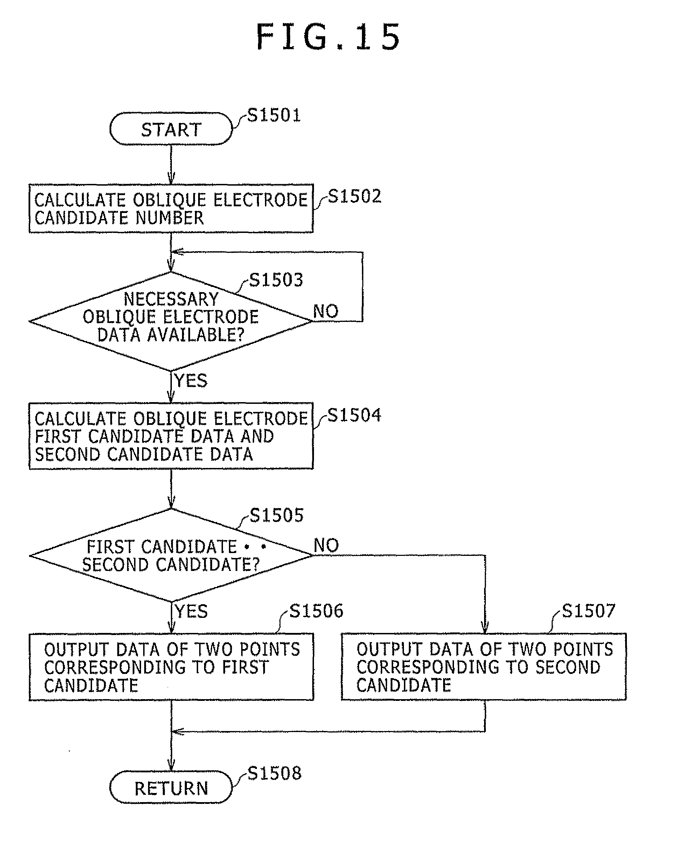

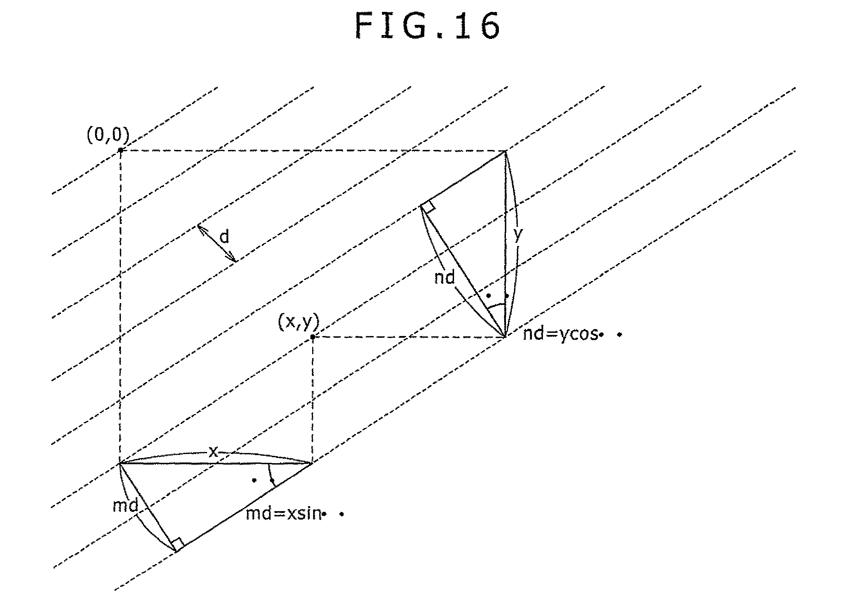

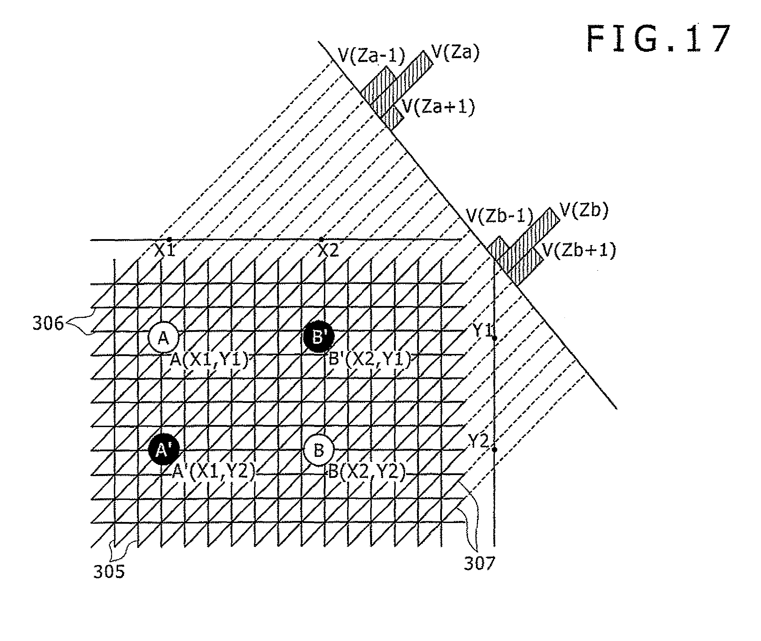

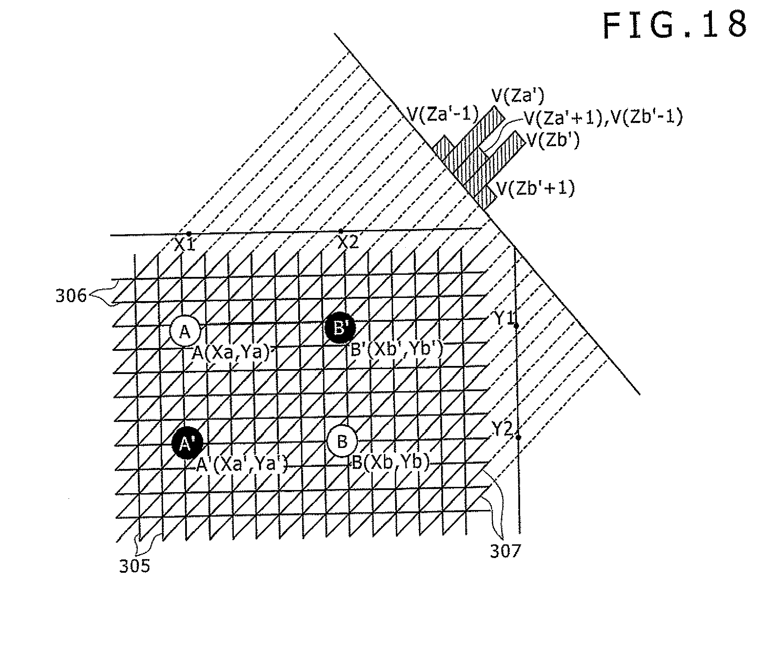

Now, the finger candidate final determination process at step S1408 executed by the coordinate calculation section 1304 in the flow chart of FIG. 14 is described with reference to FIGS. 15 to 18. FIG. 15 illustrates the finger candidate final determination process executed by the coordinate calculation section 1304, and FIG. 16 illustrates a relationship of the point at which a finger exists to the angle of an oblique electrode and the distance between oblique electrodes. FIG. 17 schematically illustrates a relationship between a result of the center of gravity calculation based on measurement values obtained from the first and second conductors where fingers exist at coordinates A and B, and measurement values obtained from the third conductors at the coordinates A and B at which fingers actually exist. Further, FIG. 18 schematically illustrates a relationship between a result of the center of gravity calculation based on measurement values obtained from the first and second conductors where fingers exist at coordinates A and B, and measurement values obtained from the third conductors at the coordinates A' and B' to which a finger is not proximately positioned. It is to be noted that as shown in FIGS. 17 and 18, the following description proceeds under the assumption that a finger 105 is positioned in the proximity of each of the coordinate A (X1, Y1) and the coordinate B (X2, Y2), for convenience.

Where a finger 105 exists at each of the coordinates A and B shown in FIGS. 17 and 18, if the longitudinal electrode center of gravity calculation S1403 and the lateral electrode center of gravity calculation S1405 are carried out, then the values X1, X2 and Y1, Y2 are obtained. Based on the results of the calculation obtained in this manner, the coordinate calculation section 1304 carries out calculation for specifying the coordinates of the two points from among the coordinate A (X1, Y1), coordinate B (X2, Y2), coordinate A' (X1, Y2), and coordinate B' (X2, Y1) at which a finger 105 may possibly exist actually.

In particular, referring to FIG. 15, after the coordinate calculation section 1304 starts processing at step S1501, it calculates a candidate number of a third conductor 304 with regard to each of the four coordinates A, A', B and B' at step S1502. In particular, the following calculation is carried out for the coordinates A, A', B and B'.

$$Z = (x\sin\theta + y\cos\theta) \div d$$

x: calculation result obtained by longitudinal center of gravity calculation
y: calculation result obtained by lateral center of gravity calculation
$\theta$ : angle of third conductor 304 with respect to x axis
d: distance between third conductors 304
Z: (index) number of third conductor 304

The expression given above is clear in view of FIG. 16 which illustrates a relationship of the point at which a finger 105 exists to the angle of third conductors 304 and the distance between the third conductors.

Then, the coordinate calculation section 1304 executes the following calculation based on the expression given above:

$$Za = (X1\sin\theta + Y1\cos\theta) \div d$$

$$Zb = (X2\sin\theta + Y2\cos\theta) \div d$$

$$Za' = (X1\sin\theta + Y2\cos\theta) \div d$$

$$Zb' = (X2\sin\theta + Y1\cos\theta) \div d$$

Za, Zb, Za', Zb'; (index) numbers of third conductors 304

The combination of Za and Zb in the expression is determined as a first candidate and the combination of Za' and Zb' is determined as a second candidate.

Then, the coordinate calculation section 1304 checks the accumulation state of data in the storage section 1302 to confirm whether or not all data of the third conductors 304 become available at step S1503. This process is repeated until all data of the third conductors 304 become complete.

If all data of the third conductor 304 become complete (YES at step S1503), then the coordinate calculation section 1304 executes calculation based on the measurement values of the third conductors 304 based on the first candidate, and calculation based on the measurement values of the third conductors 304 based on the second candidate at step S1504. In particular, the coordinate calculation section 1304 carries out the following calculation:

In particular, the coordinate calculation section 1304 carries out for the first candidate

$$Vt = V(Za) + \beta V(Za+1) + \beta V(Za-1)$$

$$+ V(Zb) + \beta V(Zb+1) + \beta V(Zb-1)$$

and for the second candidate

$$Vt' = V(Za') + \beta V(Za'+1) + \beta V(Za'-1)$$

$$+ V(Zb') + \beta V(Zb'+1) + \beta V(Zb'-1)$$

V(Za): measurement value of Za-th third conductor 304
V (Za+1) : measurement value of Za+1th third conductor 304
V(Za-1) : measurement value of Za-1th third conductor 304
V (Zb) : measurement value of Zb-th third conductor 304
V (Zb+1): measurement value of Zb+1th third conductor 304
V (Zb-1) : measurement value of Zb-1th third conductor 304

V(Za') : measurement value of Za'th third conductor 304
V (Za'+1): measurement value of Za' +1th third conductor 304
V (Za'-1): measurement value of Za'-1th third conductor 304
V (Zb'): measurement value of Zb' th third conductor 304
V (Zb'+1) : measurement value of Zb'+1th third conductor 304
V (Zb'-1) : measurement value of Zb'-1th third conductor 304
Vt : calculation value of first candidate
Vt' : calculation value of second candidate

Then, the coordinate calculation section 1304 compares the calculation value Vt of the first candidate and the calculation value Vt' of the second candidate determined by the calculation described above with each other at step S1505. If a result of the comparison reveals that the calculation value Vt of the first candidate is greater than the calculation value Vt' of the second candidate (YES at step S105), then the coordinate calculation section 1304 outputs the coordinate data of the two points corresponding to the first candidate, that is, the data (X1, Y1) and (X2, Y2) at step S1506.

On the other hand, if the calculation value Vt' of the second candidate is greater than the calculation value Vt of the first candidate (NO at step S1505), then the coordinate calculation section 1304 outputs the coordinate data of the two points corresponding to the second candidate, that is, the data (X1, Y2) and (X2, Y1) at step S1507. Then, the series of processes is ended at step S1508.

In the present embodiment described hereinabove with reference to FIGS. 3 to 7, the angle 0 of the third conductors 304 with respect to the x axis is 45°. Accordingly, the calculation at step S1502 is carried out in accordance with the following expression:

$$Z = (x/\sqrt{2} + y/\sqrt{2}) \div d$$

It is to be noted that, since, according to the present invention, it is only necessary to compare the calculation value Vt of the first candidate and the calculation value Vt' of the second candidate with each other in magnitude to determine which one of them is greater, the calculation may be carried out in accordance with the following expression in place of the calculation expression given hereinabove:

$$Z' = (x + y) \div d$$

The present embodiment may be applied to the following applications:

(1) Where a candidate number of a third conductor 304 is calculated at step S1502 of FIG. 15, the conductor numbers Za and Zb of the first candidate may be the same or the conductor numbers Za' and Zb' of the second candidate may be the same. This is a case wherein two fingers are positioned at the same third conductor 304. In this instance, since the number of measurement values of the third conductor 304 increases, upon calculation at step S1504, a calculation process which does not use a sum value can be used instead. In particular, the following mathematical expressions may be used.

Where the values Za and Zb of the first candidate are equal to each other:

$$Vt = V(Za) + \beta V(Za+1) + \beta V(Za-1)$$

Where the values Za' and Zb' of the second candidate are equal to each other:

$$Vt' = V(Za') + \beta V(Za'+1) + \beta V(Za'-1)$$

V(Za): measurement value of the Za-th third conductor 304
V (Za+1) : measurement value of the Za+1th third conductor 304
V (Za-1) : measurement value of the Za-1th third conductor 304
V (Za') : measurement value of the Za'th third conductor 304
V (Za'+1) : measurement value of the Za' +1th third conductor 304
V (Za'-1) : measurement value of the Za'-1th third conductor 304
Vt : calculation value of the first candidate
Vt' : calculation value of the second candidate

(2) The angle of the third conductors 304 is not limited to 45° as disclosed in FIGS. 3 to 7. It is only necessary for the third conductors 304 to be juxtaposed at an angle different from those of the first conductors 302 and the second conductors 303.

While, in the present embodiment, the present invention is applied to an information processing apparatus formed from a position detection apparatus and a personal computer connected to the position detection apparatus, the present invention is not limited to this configuration. For example, the position calculation section may be built in the personal computer according to the present embodiment.

As described above, according to the present invention, the positions of two fingers which cannot be specified based on the conventional electrode line detection method can be definitively determined due to addition of the oblique conductors. As a result, a (multi-touch) position detection apparatus can be provided, which has a less expensive configuration but can detect a plurality of fingers.

While a preferred embodiment of the present invention has been described using specific terms, such description is for illustrative purpose only, and it is to be understood that changes and variations may be made without departing from the spirit or scope of the following claims.

**Claims**

**1.** A position detection apparatus, comprising:

a sensor including a plurality of first conductors juxtaposed in parallel to each other in a first direction, a plurality of second conductors juxtaposed in parallel to each other in a second direction, and a plurality of third conductors juxtaposed in parallel to each other in a third direction, said first to third conductors being disposed such that a plane defined by said first conductors, another plane defined by said second conductors, and a further plane defined by said third conductors are placed in a superposed relationship with each other; and

a signal processing circuit configured to supply a signal to said sensor and detect a position pointed to by a pointer on said sensor based on a signal obtained from said sensor in response to the signal supplied thereto; said signal processing circuit identifying a position actually pointed to by the pointer based on a signal detected through said third conductors juxtaposed in parallel to each other in the third direction when a plurality of signals originating from pointing by the pointer are detected through said first conductors juxtaposed in parallel to each other in the first direction and said second conductors juxtaposed in parallel to each other in the second direction.

2. The position detection apparatus according to claim 1, wherein the second direction has an orthogonal relationship to the first direction.

3. The position detection apparatus according to claim 2, wherein the third direction has an angle of 45 degrees with respect to the first direction.

4. The position detection apparatus according to claim 3, wherein, in said sensor configured to detect a position pointed to by the pointer, said third conductors are disposed most proximate to one face on which a position is pointed to by the pointer.

5. A method of detecting a position pointed to by a pointer using a sensor for detecting a position pointed to by the pointer, the sensor including a plurality of first conductors juxtaposed in parallel to each other in a first direction, a plurality of second conductors juxtaposed in parallel to each other in a second direction, and a plurality of third conductors juxtaposed in parallel to each other in a third direction, the first to third conductors being disposed in different directions from each other and a plane defined by the first conductors, another plane defined by the second conductors, and a further plane defined by the third conductors being placed in a superposed relationship with each other, the pointed position detection method comprising the steps of:

supplying a predetermined signal to the first to third conductors;

determining whether or not a plurality of signals corresponding to pointing by the pointer are detected from the first conductors juxtaposed in parallel to each other in the first direction and the second conductors juxtaposed in parallel to each other in the second direction in response to the supplied signal; and

identifying a position actually pointed to by the pointer based on a signal from the third conductors juxtaposed in parallel to each other in the third direction when a plurality of signals are detected in response to the pointing by the pointer.

FIG. 1

# F I G . 2

106a

PROTECTIVE
SHEET

106

SENSOR

202

104

102

# FIG. 3

# F I G . 4

# F I G . 5

# F I G . 6

# FIG.7

304

# FIG.8

FIG.9

POSITION
DETECTION
PLANE DATA

202

904

CONTROL
SECTION

903

CAPACITANCE
DETECTION
SECTION

902

902

303

302

304

106

102

FIG.10

# FIG.11

VOLTAGE (V)

V_Ref

t_0    t_1    t_2    t_3

T

TIME(t)

EP 2 299 350 A2

# F I G . 1 2

FIRST MEASUREMENT VALUE

m MEASUREMENT VALUE

FIRST MEASUREMENT VALUE

n MEASUREMENT VALUE

FIRST MEASUREMENT VALUE

p MEASUREMENT VALUE

1202

1203

1204

1202

# FIG.13

EP 2 299 350 A2

POSITION
DETECTION
PLANE DATA

1302

STORAGE
SECTION

1303

CENTER OF
GRAVITY
CALCULATION
SECTION

1304

COORDINATE
CALCULATION
SECTION

109

# FIG.14

START — S1401

S1402
ALL LONGITUDINAL ELECTRODE DATA COMPLETE? → NO

↓ YES

LONGITUDINAL ELECTRODE CENTER OF GRAVITY CALCULATION — S1403

S1404
ALL LATERAL ELECTRODE DATA COMPLETE? → NO

↓ YES

LATERAL ELECTRODE CENTER OF GRAVITY CALCULATION — S1405

S1406
FINGER PRESENT? → NO

↓ YES

S1407
TWO FINGERS? → NO

↓ YES — S1408

FINGER CANDIDATE FINAL DETERMINATION PROCESS

S1410
OUTPUT DATA OF ABSENCE OF FINGER

S1411
OUTPUT DATA OF PRESENCE OF ONE FINGER

END — S1409

# FIG.15

START — S1501

CALCULATE OBLIQUE ELECTRODE CANDIDATE NUMBER — S1502

NECESSARY OBLIQUE ELECTRODE DATA AVAILABLE? — S1503
NO

YES

CALCULATE OBLIQUE ELECTRODE FIRST CANDIDATE DATA AND SECOND CANDIDATE DATA — S1504

FIRST CANDIDATE · · SECOND CANDIDATE? — S1505
NO

YES

OUTPUT DATA OF TWO POINTS CORRESPONDING TO FIRST CANDIDATE — S1506

OUTPUT DATA OF TWO POINTS CORRESPONDING TO SECOND CANDIDATE — S1507

RETURN — S1508

# FIG.16

EP 2 299 350 A2

FIG.17

FIG.18

FIG.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10020992 B